# EUROPÄISCHE PATENTANMELDUNG

(11) **EP 0 590 414 A2**
(43) Veröffentlichungstag der Anmeldung: **06.04.1994**
(21) Anmeldenummer: 93114856.3
(22) Anmeldetag: 15.09.1993
(51) Int. Cl.: C08G 18/22, C08G 18/34, C08G 18/48

(54) **Verfahren zur Herstellung von Polyurethanschaumstoffen**

(30) Priorität: 28.09.1992 DE 4232420
(71) Anmelder: BAYER AG, 51368 Leverkusen (DE)
(72) Erfinder: Liman, Ulrich, Dr., D-40764 Langenfeld (DE); Grammes, Hartwig, D-51375 Leverkusen (DE); Wegener, Dirk, Dr., D-40789 Monheim (DE); Kaiser, Manuel, D-50999 Köln (DE)

(57) **Zusammenfassung**

Ein Verfahren zur Herstellung von Polyurethanschaumstoffen, insbesondere von Verbundkörpern durch Hinterschäumen einer Kunststoffolie als Deckschicht unter Verwendung eines Reaktionsgemischs bestehend im wesentlichen aus a) einer Polyisocyanatkomponente, b) einer Salzgruppen-freien Polyolkomponente, c) mindestens einem Treibmittel, d) Salzen von Estergruppen aufweisenden, α,β-ungesättigten Carbonsäuren, sowie gegebenenfalls e) weiteren Hilfs-und Zusatzmitteln der Polyurethanchemie, wobei als Komponente d) in der Salzform vorliegende Umsetzungsprodukte, die im statistischen Mittel pro Molekül mindestens eine Alkalicarboxylatgruppe und höchstens 0,5 alkoholische Hydroxylgruppen aufweisen, aus (i) ein- oder mehrwertigen Alkoholen und (ii) ungesättigten Dicarbonsäuren bzw. ungesättigten Dicarbonsäureanhydriden verwendet, sowie die nach diesem Verfahren hergestellten Verbundkörper.

## Beschreibung

Die Erfindung betrifft ein neues Verfahren zur Herstellung von wassergetriebenen Polyurethanschaumstoffen aus an sich bekannten Ausgangsmaterialien unter Mitverwendung von speziellen, in der Alkalisalz-Form vorliegenden α,β-ungesättigten Estercarbonsäuren als Katalysatoren und insbesondere von Verbundkörpern durch Hinterschäumen von Kunststoffolien mit derartige Katalysatoren enthaltenden, zu Polyurethanschaumstoff ausreagierenden Reaktionsgemischen, sowie die hierbei erhaltenen Verbundkörper.

Wassergetriebene Schaumstoffe, insbesondere Folienverbundkörper, die durch Hinterschäumen einer Kunststofffolie mit einem zu einem weichen oder halbharten Polyurethanschaumstoff ausreagierenden Reaktionsgemisch hergestellt werden, sind von großer technischer Bedeutung und werden beispielsweise in größerem Umfang zur Innenausstattung von Kraftfahrzeugen, Flugzeugen oder zur Herstellung von Polstermöbeln verwendet. Für die meisten dieser Einsatzgebiete ist es wesentlich, daß die Schaumstoffe neben guten mechanischen Eigenschaften keinen oder nur geringen Einfluß auf die Wärmealterung der Deckschicht aufweisen.

Insbesondere das Verhalten bei der Wärmealterung (Tendenz zur Versprödung der PVC-Deckschicht mit Rißbildung) der bekannten Hinterfüllschäume stellt ein verbesserungswürdigeres Problem dar.

Zu schlechtem Wärmestand führende Bestandteile des zum Polyurethanschaumstoff ausreagierenden Reaktionsgemisches sind beispielsweise die oftmals als Katalysator eingesetzten tertiären Amine, so daß bereits versucht wurde, diese Amine beispielsweise durch Alkalimetallsalze von Carbonsäuren wie beispielsweise Kaliumacetat zu ersetzen. Die alleinige Katalyse mit derartigen Katalysatoren ist jedoch mit dem Nachteil einer zu langen Entformzeit oder (bei erhöhter Katalysatorkonzentration) zu kurzer Startzeit verknüpft. Die Verwendung von organischen Zinnverbindungen führt zwar im allgemeinen zu einer Verbesserung des Alterungsverhaltens, jedoch wegen der Hydrolysestabilität der organischen Zinnverbindungen im wasserhaltigen Polyol zu Problemen bezüglich der konstanten Aktivierung der Polyol-Komponente über einen längeren Lagerzeitraum. Zusätzlich zur Verbesserung des Wärmestands werden sogenannte "amine trapping agents" dem Schaumsystem zugesetzt, die aber nur zu einer graduellen Verbesserung-führen und für aminkatalysierte Systeme nicht in Frage kommen.

Die US-PS 4 868 043 empfiehlt die Verwendung als Katalysatoren von in der Alkalisalz-Form vorliegenden Estercarbonsäuren aus (i) intramolekularen Carbonsäureanhydriden und (ii) Ethergruppen-freien einwertigen Alkoholen und insbesondere von in der Alkalisalz-Form vorliegenden Halbestern aus (i) intramolekularen Carbonsäureanhydriden und (ii) langkettigen Diolen. Die letztgenannten, gemäß Vorveröffentlichung bevorzugt einzusetzenden Katalysatoren sind jedoch mit dem Nachteil behaftet, daß sie wegen ihrer Monofunktionalität im Sinne der Isocyanat-Additionsreaktion zu Kettenabbruchsreaktionen und damit häufig zu einer schlechten Verarbeitbarkeit des Reaktionsgemischs und zu Schaumstoffen einer verminderten Reißfestigkeit führen. Die Hydroxyl- und Ethergruppen-freien Estercarbonsäuresalze, die gemäß Vorveröffentlichung nicht zu den bevorzugten Katalysatoren gehören, weisen eine unbefriedigende Verträglichkeit mit den übrigen Reaktionspartnern auf. Beiden Katalysator-Typen der Vorveröffentlichung gemeinsam ist schließlich der Umstand, daß ihre Verwendung zu Reaktionsgemischen führt, die bezüglich des Verhältnisses von (erwünschter langer) Startzeit zu (erwünschter kurzer) Entformungszeit den Anforderungen der Praxis noch nicht in optimaler Weise entsprechen.

Wie jetzt überraschend gefunden wurde, können die angesprochenen Probleme unter Verwendung der nachstehend näher beschriebenen erfindungswesentlichen Katalysatoren in optimaler Weise gelöst werden. Der wesentliche Punkt des nachstehend näher beschriebenen erfindungsgemäßen Verfahrens besteht darin, als Katalysatoren ausgewählte α,β-ungesättigte Estercarboxylate zu verwenden, die aufgrund ihres Gehalts an Ethergruppen und/oder aufgrund ihres vergleichsweise hohen Gehalts an Carboxylatgruppen bei gleichzeitiger Abwesenheit von kettenabbrechend wirkenden Hydroxylgruppen einerseits mit den genannten Nachteilen nicht behaftet sind und andererseits wegen des Vorliegens von olefinischen Doppelbindungen in Nachbarschaft zu den Carboxylatgruppen zur-Addition von Aminogruppen, die während der langsamen Schaumalterung entstehen können befähigt sind, so daß die Alterung des Schaumstoffs und gegebenenfalls der Deckschichtfolie deutlich verringert wird. Dieser Mechanismus sogenannter "amine trapping agents" wurde bisher mit Additiven erreicht, die aber nicht als Katalysator für die PUR-Reaktion verwendbar waren (s.a. G. Avar, J. Thompson-Colon, SAE Conference 1988, 880 507).

Die ältere deutsche Patentanmeldung P 42 18 840.7 befaßt sich mit der Verwendung von ähnlichen Katalysatoren bei der Herstellung von Folienverbundkörpern auf Polyurethanbasis, jedoch weisen die dort genannten Estercarboxylate im statistischen Mittel pro Molekül mindestens zwei Hydroxylgruppen auf. Die Verwendung derartiger Verbindungen ist nicht Gegenstand der vorliegenden Erfindung.

Gegenstand der Erfindung ist ein Verfahren zur Herstellung von Polyurethanschaumstoffen durch Umsetzung
a) einer Polyisocyanatkomponente mit
b) einer Salzgruppen-freien Polyolkomponente
in Gegenwart von
c) mindestens einem Treibmittel,
d) Salzen von Estergruppen aufweisenden, α,β-ungesättigten Carbonsäuren, sowie gegebenenfalls
e) weiteren Hilfs- und Zusatzmitteln der Polyurethanchemie,
dadurch gekennzeichnet, daß man als Komponente d) in einer Menge von 0,01 bis 100 Gew.-%, bezogen auf das Gewicht der Komponente b), in der Salz-Form, vorzugsweise Alkalisalz-Form, vorliegende Umsetzungsprodukte, die im statistischen Mittel pro Molekül mindestens eine Alkalicarboxylatgruppe und höchstens 0,5 alkoholische Hydroxylgruppen aufweisen, aus (i) Alkoholen, ausgewählt aus der Gruppe bestehend aus einwertigen, Ethergruppen aufweisenden Alkoholen des Molekulargewichtsbereichs 76 bis 4000, mehrwertigen, gegebenenfalls Ethergruppen aufweisenden Alkoholen des Molekulargewichtsbereichs 62 bis 8000 und deren Gemischen und (ii) α,β-ungesättigten Dicarbonsäuren bzw. intramolekularen Anhydriden derartiger Säuren verwendet.

Gegenstand der Erfindung ist insbesondere auch die Herstellung von Verbundkörpern durch Hinterschäumen einer Kunststoffolie als Deckschicht mit einem zu einem Polyurethanschaumstoff ausreagierenden Reaktionsgemisch der vorstehend genannten Art.

Gegenstand der Erfindung sind schließlich auch die so erhaltenen Verbundkörper.

Bei der beim erfindungsgemäßen Verfahren einzusetzenden Polyisocyanatkomponente a) handelt es sich um beliebige Di- oder Polyisocyanate, insbesondere um solche mit aromatisch gebundenen Isocyanatgruppen. Vorzugsweise werden 2,4-Diisocyanatotoluol, dessen technische Gemische mit 2,6-Diisocyanatotoluol (TDI), sowie insbesondere bei Raumtemperatur flüssige Polyisocyanatgemische der Diphenylmethanreihe (MDI) eingesetzt. In diesem Zusammenhang insbesondere von Interesse sind Polyisocyanatgemische, wie sie durch Phosgenierung von Anilin-Formaldehyd-Kondensaten erhalten werden bzw. aus derartigen Phosgenierungsprodukten hergestellte Destillationsfraktionen bzw. Destillationsrückstände oder Urethan-, Carbodiimid- und/oder Uretdiongruppen aufweisende Modifizierungsprodukte derartiger Polyisocyanate oder Polyisocyanatgemische der Diphenylmethanreihe. Die bevorzugten, gegebenenfalls chemisch modifizierten Polyisocyanatgemische der Diphenylmethanreihe weisen im allgemeinen einen NCO-Gehalt von ca. 25 bis 33 Gew.-% auf.

Bei der Komponente b) handelt es sich insbesondere um Polyetherpolyole oder Gemische von Polyetherpolyolen mit einem (mittleren), aus Hydroxylgruppengehalt und Hydroxylfunktionalität errechenbaren Molekulargewicht von 400 bis 12 000, vorzugsweise 2 000 bis 6 000, und einer (mittleren) Hydroxylfunktionalität von 2 bis 8, vorzugsweise 2 bis 4, oder um Gemische aus derartigen Polyetherpolyolen mit mehrwertigen Alkoholen eines unter 400 liegenden Molekulargewichtes, die gegebenenfalls in einer Menge von bis zu 25 Gew.-%, bezogen auf das Gewicht der Polyetherpolyole mitverwendet werden können.

Die in Betracht kommenden Polyetherpolyole sind solche der an sich bekannten Art, wie sie durch Alkoxylierung geeigneter Startermoleküle, in an sich bekannter Weise zugänglich sind. Geeignete Startermoleküle sind beispielsweise Ethylenglykol, Propylenglykol, Trimethylolpropan, Glycerin, Sorbit, Pentaerythrit oder Saccharose bzw. beliebige Gemische derartiger mehrwertiger Alkohole. Ganz besonders bevorzugt werden Polyetherpolyole eingesetzt, die durch Alkoxylierung von trifunktionellen Startermolekülen, insbesondere von Trimethylolpropan und/oder Glycerin erhalten worden sind. Bei den Alkylenoxiden, die bei der Alkoxylierungsreaktion zum Einsatz gelangen, handelt es sich insbesondere um Propylenoxid oder Ethylenoxid bzw. um Gemische dieser beiden Alkylenoxide. Die genannten Alkylenoxide können bei der Alkoxylierungsreaktion auch nacheinander zum Einsatz gelangen. Weitere im Prinzip geeignete Polyole, die als Komponente b) zum Einsatz gelangen können, sind beispielsweise in der EP-A 0 380 993 beschriebene.

Auch niedermolekulare mehrwertige, vorzugsweise 2- oder 3-wertige Alkohole eines unter 400 liegenden Molekulargewichts wie z.B. Ethylenglykol, Propylenglykol, Diethylenglykol, Dipropylenglykol, Glycerin, Trimethylolpropan oder deren Gemische können in Mengen von bis zu 25 Gew.-% Teil der Komponente b) sein.

Bei der Komponente c) handelt es sich vorzugsweise um Wasser. Neben Wasser können als Treibmittel auch beispielsweise halogenierte Kohlenwasserstoffe wie Trifluorchlormethan, fluorierte Kohlenwasserstoffe, leichtflüchtige organische Lösungsmittel wie z.B. Pentan, Aceton oder Diethylether eingesetzt werdend Die Mitverwendung solcher Treibmittel neben Wasser ist allerdings weniger bevorzugt.

Bei den erfindungswesentlichen Katalysatoren d) handelt es sich um α,β-ungesättigte Estercarboxylate, die im statistischen Mittel pro Molekül 0 bis 0,5 Hydroxylgruppen und mindestens eine, vorzugsweise 2 bis 4 Carboxylatgruppen aufweisen. Es handelt sich um in der Salzform vorliegende Umsetzungsprodukte von (i) bestimmten Alkoholen mit (ii) α,β-olefinisch ungesättigten Dicarbonsäuren bzw. Anhydriden derartiger Säuren.

Als Alkohole (i) kommen in Betracht:
- einwertige Polyetheralkohole des Molekulargewichtsbereichs 76 bis 4000, vorzugsweise 250 bis 1000, wie sie in an sich bekannter Weise durch Alkoxylierung von einwertigen, Ethergruppen-freien Alkoholen erhältlich sind. In Betracht kommen beispielsweise die Ethoxylierungs- und/oder Propoxylierungsprodukte von C₁-C₈-Alkanolen wie beispielsweise Methanol, Ethanol, den isomeren Propanolen, Butanolen, Hexanolen oder Octanolen;
- mehrwertige, Ethergruppen-freie Alkohole des Molekulargewichtsbereichs 62 bis 300 wie beispielsweise Ethylenglykol, Propylenglykol, Glycerin, Trimethylolpropan, Sorbit oder Pentaerythrit;
- die Ethoxylierungs- und/oder Propoxylierungsprodukte mit einem maximalen Molekulargewicht von 8000, vorzugsweise 300-1000 von Ethergruppen-freien mehrwertigen Alkoholen der vorstehend beispielhaft genannten Art und
- Gemische der vorstehend genannten Alkohole.

Als Komponente (ii) zur Herstellung der Katalysatoren d) sind α,β-ungesättigte Dicarbonsäuren oder Anhydride derartiger Säuren geeignet. In Betracht kommen beispielsweise Fumarsäure, Maleinsäure oder Maleinsäureanhydrid. Maleinsäureanhydrid ist besonders bevorzugt.

Die Herstellung der Estercarbonsäuren aus den Ausgangsmaterialien (i) und (ii) erfolgt in an sich bekannter Weise, im allgemeinen in Substanz innerhalb des Temperaturbereichs von 20 bis 100⁰C, bis die theoretisch zu erwartende Säurezahl des Umsetzungsproduktes erreicht ist. Zur Überführung der gebildeten Carboxylgruppen in Carboxylatgruppen werden vorzugsweise Hydroxide, Carbonate oder Dicarbonate von Natrium oder Kalium oder in der Polyurethanchemie übliche Amin-Katalysatoren der auch nachstehend beispielhaft genannten Art eingesetzt, wobei diese Basen vorzugsweise in Form von wäßrigen Lösungen zum Einsatz gelangen, so daß unmittelbar Gemische aus erfindungsgemäßen Katalysator d) und Treibmittel c) anfallen, die dann mit den übrigen Komponenten b) bis e) abgemischt werden. Die Herstellung der als Katalysatoren dienenden Salze durch Neutralisation der entsprechenden Estercarbonsäuren kann auch in der Komponente b) oder einem Teil der als Komponente b) zum Einsatz gelangenden Alkohole durchgeführt werden, so daß unmittelbar Lösungen der Katalysatoren d) in der Polyolkomponente b) bzw. einem Teil hiervon resultieren.

Falls zur Herstellung der Salze größere Wassermengen erforderlich sind als später als Treibmittel benötigt werden, kann der unerwünschte Überschuß selbstverständlich vor der Durchführung des erfindungsgemäßen Verfahrens destillativ entfernt werden.

Die erfindungswesentlichen Katalysatoren d) werden bei der Durchführung des erfindungsgemäßen Verfahrens in einer Menge von 0,01 bis 100, vorzugsweise 0,1 bis 10 Gew.-%, bezogen auf das Gewicht der Komponente b) eingesetzt.

Neben den erfindungswesentlichen Katalysatoren kann das Reaktionsgemisch auch noch weitere, an sich bekannte Katalysatoren enthalten, obwohl dies weniger bevorzugt ist. Derartige Katalysatoren sind beispielsweise beliebige Alkalisalze von Carbonsäuren, die nicht der Definition der Komponente d) entsprechen, wie beispielsweise Kaliumacetat, Kaliumtartrat oder Kaliumsuccinat oder klassische Katalysatoren wie Triethylendiamin, Bis-(2-dimethylaminoethyl)-ether, N,N-Dimethylethanolamin, N,N,N',N'',N''-Pentamethyldiethylentriamin, N-Methylmorpholin, Dimethylbenzylamin, tertiäre Alkylphosphine, Zinn(II)-octoat, Dibutylzinn-(IV)-dilaurat, sowie Chelate von Metallen, wie z.B. Chelate des Acetylacetonats von Magnesium, Zirkon oder Nickel. Diese gegebenenfalls mitverwendeten, der Gruppe e) der erfindungsgemäßen Ausgangsmaterialien zuzuordnenden Katalysatoren, werden, falls überhaupt, allenfalls in Mengen von max. 1,0 Gew.-%, bezogen auf das Gewicht der Komponente b) eingesetzt.

Weitere gegebenenfalls mitzuverwendende Hilfsmittel e) sind die üblichen Zusatzstoffe wie Flammschutzmittel, Füllstoffe, Pigmente, Weichmacher, Antistatika oder Zellregulierungsmittel.

Bei der Durchführung des erfindungsgemäßen Verfahrens werden die genannten Ausgangsmaterialien in solchen Mengenverhältnissen miteinander zur Reaktion gebracht, die einer NCO-Kennzahl (Anzahl der NCO-Gruppen dividiert durch die Anzahl der gegenüber NCO-Gruppen reaktionsfähigen Gruppen, multipliziert mit 100) von 60 bis 140 entspricht. Im allgemeinen werden die Komponenten b) bis e) zu einer "Polyolkomponente" vermischt, die dann nach den üblichen Methoden der Polyurethanschaumstoffherstellung mit der Polyisocyanatkomponente zur Reaktion gebracht wird.

Das erfindungsgemäße Verfahren eignet sich zur Herstellung von beliebigen Schaumstoffen. Vorzugsweise handelt es sich bei den erfindungsgemäßen Verfahrensprodukten jedoch um weiche oder halbharte Polyurethanschaumstoffe (Stauchhärte von 20 bis 400 KPa bei 40 % Verformung) einer Rohdichte von 30 bis 500, vorzugsweise 30 bis 200 kg/m³, wie sie in an sich bekannter Weise zum Hinterschäumen von Kunststoffolien zwecks Herstellung von Folienverbundwerkstoffen für Polsterzwecke bzw. den Innenbereich von Kraftfahrzeugen, Flugzeugen oder Schiffen (Armaturenbretter, Türinnenverkleidungen, Armlehnen, Kopfstützen u.dgl.) zum Einsatz gelangen.

Für diesen speziellen Zweck geeignete Kunststoffolien sind alle beliebigen Deckschichten, die bisher bei der Herstellung von Folienverbundwerkstoffen durch Hinterschäumen von Kunststoffolien mit Polyurethanschaumstoffen hergestellt worden sind. Beispielhaft genannt seien Folien aus Polyvinylchlorid (PVC), Polyurethan, Polymerblends aus PVC und ABS oder thermoplastischen Polyolefinen.

Vorzugsweise erfolgt die Durchführung des erfindungsgemäßen Verfahrens dergestalt, daß man die Innenwände einer Form zumindest teilweise mit der zu hinterschäumenden Kunststoffolie auskleidet und dann das Formwerkzeug mit dem schäumfähigen Gemisch befüllt. Die für die Innenauskleidung der Formel verwendeten Folien können in an sich bekannter Weise vorgeformt werden, wobei man sich der bekannten Technik des Tiefziehens bzw. "Powder-Slush" bedient.

Die Menge des in die Form eingetragenen schäumfähigen Gemischs wird im allgemeinen so bemessen, daß Schaumstoffe des bereits obengenannten Rohdichtehereichs resultieren.

Die nachfolgenden Beispiele dienen der weiteren Erläuterung des erfindungsgemäßen Verfahrens.

### Beispiele

### 1. Herstellung eines erfindungsgemäß zu verwendenden Katalysators

265 g (2,7 Mol) Maleinsäureanhydrid werden mit 675 g (1,0 Mol) eines Polyetherpolyols des Molekulargewichts 675, hergestellt durch Propoxylierung von Trimethylolpropan, bei 50⁰C gerührt, bis das Anhydrid aufgelöst ist. Die Reaktion wird bei Erreichen einer Säurezahl von 161 mg KOH/g beendet. Die Überführung des auf diese Weise hergestellten Halbesters in das entsprechende Alkalisalz erfolgt in der nächsten Reaktionsstufe.

### 2. Herstellung einer erfindungsgemäßen Polyolformulierung

100 Gew.-Teile eines Polyetherpolyols, OH-Zahl 28, hergestellt durch Propoxylierung von Trimethylolpropan und anschließende Ethoxylierung des Propoxylierungsprodukts (PO:EO-Gewichtsverhältnis 85:15), werden mit 3 Gew.-Teilen des unter 1) beschriebenen Halbesters vermischt. Anschließend wird diese Mischung mit 0,48 Gew.-Teilen Kaliumhydroxid, gelöst in 2,3 Gew.-Teilen Wasser vermischt.

### 3. Polyisocyanatkomponente

In den nachfolgenden Beispielen wurde ein Polyisocyanatgemisch der Diphenylmethanreihe mit einem Gehalt an 4,4'-MDI von 50 Gew.-%, an 2,4'-MDI von 5 Gew.-% und an höheren MDI-Analogen von 45 Gew.-%, einer Viskosität (23⁰C) von 200 mPa.s und einem NCO-Gehalt von 32 Gew.-% verwendet.

### 4. Erfindungsgemäßes Beispiel und Vergleichsbeispiele

Die Herstellung der Schaumstoffe erfolgt nach der Methode der Handverschäumung. Dabei werden alle Komponenten mit Ausnahme der Polyisocyanatkomponente während 30 s vorgerührt (Rührgeschwindigkeit: 1000 U/min). Anschließend wird die Polyisocyanatkomponente zugesetzt und während weiterer 10 s bei Raumtemperatur weiter gerührt. Die NCO-Kennzahl beträgt in allen Beispielen 100.

Das flüssige, schaumfähige Gemisch wird dann in ein Werkzeug zur Plattenherstellung der Abmessung 20 x 20 x 2 cm gegeben, dessen Innenwände vorher mit einer Folie der Dicke 1 mm aus Weich-PVC ausgekleidet worden sind. Die Menge des schäumfähigen Gemischs wird jeweils so bemessen, daß die Rohdichte des resultieenden Schaumstoffs 150 kg/m³ beträgt.

Die Start-, Steig- und Abbindezeiten wurden in Parallelversuchen bestimmt, wobei die Polyolformulierung wie beschrieben mit der Polyisocyanatkomponente in einem Becherglas unter Rühren bei Raumtemperatur vereinigt wird. Die Startzeit ist dann die Zeit, die von Zeitpunkt der Polyisocyanatzugabe bis Beginn des Schäumvorgangs verstreicht; die Steigzeit ist die Zeit, die vom Zeitpunkt der Polyisocyanatzugabe bis zur Beendigung des Schäumvorgangs verstreicht; die Abbindezeit ist die Zeit, die vom Zeitpunkt der Polyisocyanatzugabe bis zur Klebfreiheit des Schaumstoffs verstreicht.

Die Reißdehnung wurde an der Deckfolie der hergestellten Platte nach DIN 53 571 geprüft. Das Foggingverhalten wurde jeweils anhand von Schaumstoff-Prüfscheiben des Durchmessers 8 cm und der Dicke 2 cm geprüft. Die Prüfkörper wurden unterhalb einer gekühlen Glasscheibe jeweils während 16 Stunden auf 100⁰C erhitzt und das an der gekühlten Glasscheibe gebildete Kondensat gewogen (DIN 75210, Methode B).

Die Stauchhärte bei 40 % Verformung nach DIN 53 577 wurde an der Schaumplatte vor und nach der Alterung (500 h, 120⁰C) gemessen. Die Abweichung der Stauchhärte nach der Alterung des Schaumes wurde prozentual bezogen auf den ungealterten Schaum als Eigenschaftserhalt angegeben. Einzelheiten sind der nachstehenden Tabelle zu entnehmen.

Beispiel A ist erfindungsgemäß unter Verwendung der oben genannten Ausgangsmaterialien.

Beispiel B ist ein Vergleichsbeispiel, welches dem erfindungsgemäßen Beispiel A entspricht, wobei lediglich der erfindungsgemäße Katalysator (bestehend aus dem Halbester gemäß 1) und dem in 2) zu seiner Neutralisation verwendeten Kaliumhydroxid durch 0,3 Gew.-Teile Kaliumacetat ersetzt worden ist.

Beispiel C ist ein Vergleichsbeispiel, welches dem erfindungsgemäßen Beispiel entspricht, wobei lediglich der erfindungsgemäße Katalysator durch 0,76 Gew.-Teile permethyliertes Diethylendiamin ersetzt worden ist.

Beispiel D ist ein Vergleichsbeispiel, welches dem erfindungsgemäßen Beispiel entspricht, wobei lediglich der erfindungsgemäße Katalysator durch 4 Gew.-Teile des Umsetzungsprodukts aus äquimolaren Mengen Polyethylenglykol des Molekulargewichts 600 und Maleinsäureanhydrid, neutralisiert mit einer stöchiometrischen Menge Kaliumhydoxid, ersetzt worden ist.

Die Katalysator-Konzentrationen wurden in allen Beispielen so gewählt, daß annähernd gleiche Steigzeiten resultieren.

| Beispiel | A | B | C | D | Folie ungealtert |
|---|---|---|---|---|---|
| Standzeit (s) | 34 | 12 | 14 | 22 | - |
| Steigzeit (s) | 103 | 100 | 100 | 105 | - |
| Abbindezeit (s) | 100 | 130 | 100 | 120 | - |
| Reißdehnung der Deckschichtfolie nach 500 h Alterung bei 120⁰C (N/mm) | 180 | 39 | 9 | 39 | 250 |
| Foggingverhalten (mg) | 0,4 | 0,6 | 1,7 | 0,4 | - |
| Eigenschaftserhalt nach 500 h Alterung bei 120⁰C in (%)-bezogen auf die Stauchhärte | 86 | 60 | 45 | 60 | - |

## Patentansprüche

1. Verfahren zur Herstellung von Polyurethanschaumstoffen durch Umsetzung
a) einer Polyisocyanatkomponente mit
b) einer Salzgruppen-freien Polyolkomponente
in Gegenwart von
c) mindestens einem Treibmittel,
d) Salzen von Estergruppen aufweisenden, α,β-ungesättigten Carbonsäuren, sowie gegebenenfalls
e) weiteren Hilfs- und Zusatzmitteln der Polyurethanchemie,
dadurch gekennzeichnet, daß man als Komponente d) in einer Menge von 0,01 bis 100 Gew.-%, bezogen auf das Gewicht der Komponente b), in der Salz-Form vorliegende Umsetzungsprodukte, die im statistischen Mittel pro Molekül mindestens eine Alkalicarboxylatgruppe und höchstens 0,5 alkoholische Hydroxylgruppen aufweisen, aus (i) Alkoholen, ausgewählt aus der Gruppe bestehend aus einwertigen, Ethergruppen aufweisenden Alkoholen des Molekulargewichtsbereichs 76 bis 4000, mehrwertigen, gegebenenfalls Ethergruppen aufweisenden Alkoholen des Molekulargewichtsbereichs 62 bis 8000 und deren Gemischen und (ii) α,β-ungesättigten Dicarbonsäuren bzw. intramolekularen Anhydriden derartiger Säuren verwendet.

2. Verfahren gemäß Anspruch 1 zur Herstellung von Verbundkörpern durch Hinterschäumen einer Kunststofffolie als Deckschicht mit einem zu einem Polyurethanschaumstoff ausreagierenden Reaktionsgemisch, bestehend im wesentlichen aus den in Anspruch 1 genannten Komponenten a), b), c), d) und gegebenenfalls e), dadurch gekennzeichnet, daß man als Komponente d) in einer Menge von 0,01 bis 100 Gew.-%, bezogen auf das Gewicht der Komponente b), in der Salz-Form vorliegende Umsetzungsprodukte, die im statistischen Mittel pro Molekül mindestens eine Alkalicarboxylatgruppe und höchstens 0,5 alkoholische Hydroxylgruppen aufweisen, aus (i) Alkoholen, ausgewählt aus der Gruppe bestehend aus einwertigen, Ethergruppen aufweisenden Alkoholen des Molekulargewichtsbereichs 76 bis 4000, mehrwertigen, gegebenenfalls Ethergruppen aufweisenden Alkoholen des Molekulargewichtsbereichs 62 bis 8000 und deren Gemischen und (ii) α,β-ungesättigten Dicarbonsäuren bzw. intramolekularen Anhydriden derartiger Säuren verwendet.

3. Verfahren gemäß Anspruch 1 und 2, dadurch gekennzeichnet, daß man als Komponente a) bei Raumtemperatur flüssige, gegebenenfalls Urethan-, Carbodiimid- und/oder Uretdiongruppen aufweisende Polyisocyanatgemische der Diphenylmethanreihe verwendet.

4. Verfahren gemäß Anspruch 1 bis 3, dadurch gekennzeichnet, daß man als Komponente b) Polyetherpolyole oder Gemische von Polyetherpolyolen einer (mittleren) Hydroxylfunktionalität von 2 bis 4 bei einem Molekulargewicht von 400 bis 12 000, oder Gemische derartiger Polyetherpolyole mit bis zu 25 Gew.-%, bezogen auf das Gewicht der Komponente b) an 2- und/oder 3-wertigen Alkoholen eines unter 400 liegenden Molekulargewichtes verwendet.

5. Verfahren gemäß Anspruch 1 bis 4, dadurch gekennzeichnet, daß man als Komponente c) Wasser verwendet.

6. Gemäß Anspruch 2 hergestellte Verbundkörper.
